# EUROPÄISCHE PATENTSCHRIFT

(11) **EP 3 631 290 B1**
(45) Veröffentlichungstag und Bekanntmachung des Hinweises auf die Patenterteilung: **19.06.2024**
(21) Anmeldenummer: 18717302.6
(22) Anmeldetag: 05.04.2018
(51) Int. Cl.: B60Q 3/78, B60Q 3/60, F21V 7/00, B60Q 3/10, F21V 15/01, F21Y 103/10, F21Y 115/10, F21Y 107/70

(54) **BELEUCHTUNGSVORRICHTUNG ZUR BELEUCHTUNG DES INNENRAUMS EINES KRAFTFAHRZEUGS**
LIGHTING DEVICE FOR LIGHTING THE INTERIOR OF A MOTOR VEHICLE
DISPOSITIF D'ÉCLAIRAGE POUR ÉCLAIRER L'HABITACLE D'UN VÉHICULE À MOTEUR

(30) Priorität: 29.05.2017 DE 102017208999
(43) Veröffentlichungstag der Anmeldung: 08.04.2020
(73) Patentinhaber: Volkswagen Aktiengesellschaft, 38440 Wolfsburg (DE)
(72) Erfinder: FRANKE, Stefan, 38536 Seershausen (DE); ZANDER, Klaus, 39393 Hötensleben (DE)
(86) Internationale Anmeldenummer: PCT/EP2018/058778
(87) Internationale Veröffentlichungsnummer: WO 2018/219531

(56) Entgegenhaltungen:
- EP-A1- 3 051 203
- EP-A1- 3 081 845
- WO-A1-2006/126114
- WO-A1-2008/137076
- WO-A2-2009/145486
- FR-A1- 2 956 469
- US-A1- 2011 199 767

## Beschreibung

Die Erfindung betrifft eine Beleuchtungsvorrichtung zur Beleuchtung des Innenraums eines Kraftfahrzeugs mit den Merkmalen vom Oberbegriff des Patentanspruchs 1.

Die die Merkmale vom Oberbegriff des geltenden Anspruchs 1 aufweisende WO 2008/137076 A1 beschreibt eine Beleuchtungsvorrichtung zur Beleuchtung des Innenraums von Bussen, Bahnen und dergleichen. Die Beleuchtungsvorrichtung umfasst eine modulare Einheit sowie ein lichtdurchlässiges Element. Die modulare Einheit ist aus biegesteifem, wärmeleitendem Material, beispielsweise Aluminium. Sie dient als Wärmesenke für eine Vielzahl von Leuchtdioden, welche auf einer Platine angeordnet sind. Die Platine ist an einem LED-Träger befestigt, welcher wiederum an nutartigen Vertiefungen der modularen Einheit befestigt ist. Die modulare Einheit weist ferner einen gekrümmten Teil auf, welcher mit einer reflektierenden Oberfläche versehen ist, wodurch die modulare Einheit somit als Reflektor dient. Das lichtdurchlässige Element ist als lichtstreuende Lichtscheibe ausgebildet und kann an der modularen Einheit befestigt werden, wodurch der LED-Träger zwischen der modularen Einheit und dem lichtdurchlässigen Element aufgenommen ist. Im Betrieb der Beleuchtungsvorrichtung wird das Licht der Leuchtdioden zunächst durch die diffus lichtstreuende Oberfläche des gekrümmten Teils der modularen Einheit gestreut und durchdringt danach das lichtstreuende, lichtdurchlässige Element. Dadurch wird das von den Leuchtdioden ausgesendete Licht abermals gestreut. Auf diese Weise werden einzelne der Leuchtdioden für einen Betrachter nicht sichtbar.

Aus der EP 3 081 845 A1 ist eine Haltestruktur für Lichtquellen mit einem bandartigen Trägerteil bekannt geworden. Die Haltestruktur weist Befestigungsstellen für die Lichtquellen (LEDs) auf. Ferner sind durch die Haltestruktur mehrere Einheiten mit jeweils einer Vielzahl von Befestigungsstellen für Lichtquellen ausgebildet. Mehrere solcher Einheiten können von dem Trägerteil gelöst und als Beleuchtungseinrichtung miteinander verbunden werden.

Der FR 2 956 469 A1 ist eine Beleuchtungsvorrichtung für ein Kraftfahrzeug mit einem Gehäuse zu entnehmen, wobei an der Innenseite von gegenüberliegenden Gehäusewandungen Platinen mit LEDs angeordnet sind. Die Gehäusewandungen sind in Richtung eines im Profil gewellten Reflektors derart geneigt, dass Lichtstrahlen der LEDs auf den Reflektor auftreffen und durch diesen in Richtung einer Lichtscheibe reflektiert werden.

Die Lichtscheibe weist eine lichtstreuende Oberfläche auf und streut die vom Reflektor kommenden Lichtstrahlen.

In der WO 2006/126114 A1 wird eine Beleuchtungsvorrichtung beschrieben, welche einen Träger für Leuchtmittel und einen Reflektor mit einer Reflektorfolie aufweist. Zwischen dem Träger und einer Abschirmung des Reflektors ist ein Spalt ausgebildet. Im Betrieb werden Lichtstrahlen der Leuchtmittel auf die Reflektorfolie geworfen und an dieser derart reflektiert, dass sie, im Bereich des Spaltes eine Konzentration ausbildend, aus dem Spalt austreten.

Die US 2011/199767 A1 zeigt eine Beleuchtungsvorrichtung für ein gekühltes Displaygehäuse. Diese weist ein LED-Befestigungsteil, einen Reflektor mit einer reflektierenden Oberfläche und eine Lichtscheibe auf. Das LED-Befestigungsteil, der Reflektor sowie die Lichtscheibe sind miteinander derart befestigt, dass sich eine Kammer ausbildet.

Eine Beleuchtungsvorrichtung ist ferner aus der DE 20 2006 002 728 U1 bekannt geworden. Bei der darin offenbarten Leuchte wird das längliche Gehäuse durch ein U-förmiges Profil gebildet. In den Grund des Profils ist mittels einer Vergussmasse ein ebenso länglicher Träger für LEDs (lichtemittierende Dioden) eingebettet. Die LEDs sind in Längsrichtung des Gehäuses gruppenweise nebeneinander angeordnet. Ferner ist die Beleuchtungsvorrichtung in ihrer Gesamtheit biegsam ausgebildet. Zu diesem Zweck ist sie aus einem synthetischen Kautschuk hergestellt. Die Beleuchtungsvorrichtung kann in ihrer Breite wenige Zentimeter und in ihrer Länge mehrere Meter betragen. Damit eine kostengünstige Herstellung möglich ist, wird deren Herstellung als Strangpressteil vorgeschlagen.

In der DE 10 2015 107 047 A1 wird eine Beleuchtungsvorrichtung für eine indirekte Raumbeleuchtung vorgeschlagen. Konkret besteht die Beleuchtungsvorrichtung aus einem im Querschnitt in etwa rechteckförmigen Lichtdiffusor mit zwei nebeneinander liegenden Hohlkammern. Der Lichtdiffusor ist leistenartig ausgebildet und mittels einer Ankereinrichtung an der Unterseite einer verschieblich gelagerten Schranktür befestigt. In der der Frontfläche des Schrankes abgewandten Hohlkammer des Lichtdiffusor ist eine Lichtleiste mit einer Vielzahl von LEDs angeordnet. Der Lichtdiffusor ist aus einem milchigtrüben, transluzenten Material hergestellt und soll dafür Sorge tragen, dass eine im Wesentlichen homogene Lichtabstrahlung des Lichts bewirkt wird, welches von einer Vielzahl einzelner LEDs abgegeben wird.

Die oben erwähnten Beleuchtungsvorrichtungen können jedoch nicht die Ansprüche hinsichtlich einer geforderten Homogenität in der Lichtabstrahlung erfüllen, die im Automobilbereich erwünscht ist.

Der vorliegenden Erfindung liegt daher die Aufgabe zu Grunde, eine Beleuchtungsvorrichtung bereitzustellen, die hinsichtlich Homogenität des abgestrahlten Lichts hohen automotiven Ansprüchen genügt und welche bei hoher Lichteffizienz kompakt aufgebaut werden kann.

Die vorliegende Aufgabe wird mit den Merkmalen von Anspruch 1 gelöst. Vorteilhafte Ausbildungen beziehungsweise Weiterbildungen der Erfindung sind den abhängigen Ansprüchen zu entnehmen.

Die Erfindung geht aus von einer Beleuchtungsvorrichtung zur Beleuchtung des Innenraums eines Kraftfahrzeugs, mit einem länglichen Gehäuse, durch welches ein bandartiger Träger mit einer Vielzahl von Leuchtmitteln gehalten ist.

Das Gehäuse ist als Reflektorelement ausgebildet, welches erfindungsgemäß wenigstens eine Reflektorkammer aufweist, in der von den Leuchtmitteln abgebbare oder abgegebene Lichtstrahlen diffus reflektierbar sind oder reflektiert werden, bevor sie zu einer Lichtaustrittsöffnung gelangen.

Es hat sich gezeigt, dass mit einer derartigen Beleuchtungsvorrichtung auch bei Verwendung von punktartigen Leuchtmitteln wie LEDs, eine ausgesprochen homogene Lichtabstrahlung realisierbar ist. Die Lichtabstrahlung ist zudem auch in ihrer Helligkeit ausreichend, um Beleuchtungseffekte im Kraftfahrzeug auch bei Tag deutlich wahrnehmen zu können.

Das Gehäuse ist nach einem weiteren Merkmal der Erfindung im Querschnitt G-artig ausgebildet. Durch einen derartigen Querschnitt können auf einfache Weise die genannte Reflektorkammer und der Lichtaustritt erzeugt werden. Insbesondere ermöglicht ein G-artiger Querschnitt eine große Lichtstrecke des von den Leuchtmitteln ausgestrahlten Lichts im Verhältnis zum Bauraum. Hierdurch kann die Beleuchtungsvorrichtung bei hoher Lichteffizienz sehr kompakt aufgebaut werden und bietet gegenüber Lösungen mit Lichtleitern auch einen Gewichtsvorteil. Durch die erzeugbare große Lichtstrecke wird die diffuse Streuung der erzeugten Lichtstrahlen verstärkt.

Um einer vorgegebenen beziehungsweise gewünschten Kontur eines Lichtsaustritts folgen zu können bzw. eine Anpassung an verschieden gebogene Gehäuse zu ermöglichen, ist es sehr zweckmäßig, den Träger für die Leuchtmittel mindestens in einer Ebene biegsam auszubilden. Bei der Nutzung von RGB-LEDs kann mit einem biegsamen Träger zudem auch eine wesentlich leichtere Kalibrierung der LEDs erfolgen, bevor der Träger in eine dreidimensionale Form gebogen wird.

Damit zur Erzeugung einer höchst homogenen Lichtabstrahlung beigetragen werden kann, wird in einer anderen Ausbildung der Erfindung vorgeschlagen, dass das Gehäuse aus einem weißen, hochreflektierenden Material und/oder mit einer weißen, hochreflektierenden Beschichtung versehen ist.

Die Beleuchtungsvorrichtung kann einfach aufgebaut und kostengünstig herstellbar sein, wenn gemäß einer Weiterbildung der Erfindung das Gehäuse im Querschnitt aus zwei jeweils einseitig geöffneten Profilen gebildet ist. Die Profile ragen mit ihren Öffnungsseiten ineinander. Die einzelnen Profile können dann sehr einfach hergestellt werden und zur Erzeugung des Gesamtprofils miteinander befestigt werden.

Im Übrigen gibt es für die Herstellung des Gehäuses folgende, bevorzugte Alternativen:
- Herstellung im Spritzgussverfahren

Dieses Verfahren ist sehr erprobt und ausgereift und lässt sich insbesondere bei hohen Stückzahlen kostengünstig darstellen
- Herstellung aus geschäumten, mikrozelligen Folien, vorzugsweise aus Polyethylenterephthalat (PET) oder Polycarbonat (PC).

Derartige Folien weisen äußerst gute optische Eigenschaften (insbesondere Reflexionseigenschaften) auf.
- Herstellung im 3D-Druck

Beim 3D-Druck können dreidimensionale Werkstücke schichtweise aufgebaut werden. Mit diesem Verfahren sind beliebige Konturen herstellbar.

Es ist sehr vorteilhaft, wenn der Träger mitsamt Leuchtmitteln als ablängbares Element derart ausgebildet ist, dass nach Ablängung (Kürzung) ein verbleibender Teil des Trägers weiterhin voll funktionsfähig ist. Der Träger für die Leuchtmittel, der beispielsweise als Leiterplatte ausgebildet ist, kann somit ausgehend von einer einheitlich vorgefertigten Länge bedarfsweise gekürzt werden. Der Träger kann auf diese Weise auch für verschiedene geometrische Anwendungen zum Einsatz kommen. Sollte die Länge eines vorgefertigten Trägers für einen konkreten Anwendungsfall einmal nicht ausreichen, können auch mehrere Träger aneinandergereiht werden.

Durch einen einheitlichen Träger auch für verschiedene Anwendungen können die Kosten für die Elektronikfertigung deutlich reduziert werden. Auch eine Kalibrierung von auf einem solchen einheitlichen Träger angeordneten Leuchtmitteln wird erheblich erleichtert, da eine Kalibrierungsvorrichtung nicht für jeden Einsatzfall gesondert hergestellt werden muss. Eine Kalibrierung ist beispielsweise dann notwendig, wenn als Leuchtmittel RGD-LED-Chips eingesetzt werden. Bei solchen LED-Chips weist jeder LED-Chip eine rotes Licht, eine grünes Licht und eine blaues Licht emittierende LED auf. Durch additive Farbmischung, welche durch eine geeignete Steuereinrichtung erzeugt werden kann, können beliebige Farben dargestellt werden.

Es hat sich gezeigt, dass die Homogenität in der Lichtabstrahlung noch dadurch verbessert werden kann, wenn durch jedes Leuchtmittel ein von einem Betrachter wahrnehmbares Leuchtsegment erzeugbar ist oder erzeugt wird, wobei die Leuchtmittel in einem solchen gegenseitigen Abstand auf dem Träger angeordnet sind, dass sich die erzeugbaren oder erzeugten Leuchtsegmente in einem Überschneidungsbereich überschneiden. Die Leuchtsegmente gehen also in Längserstreckung der Beleuchtungsvorrichtung ineinander über.

Dabei sind die Leuchtmittel vorzugsweise in einem Abstand wenigstens von etwa 15 Millimeter bis etwa 35 Millimeter, bevorzugt mit einem Abstand von wenigstens etwa 30 Millimeter beabstandet. Hierdurch lässt sich eine optimale Überschneidung der Leuchtsegmente erzielen.

Es wird außerdem vorgeschlagen, dass Gehäuse im Querschnitt mit einer Kantenlänge von etwa 20 Millimeter mal 20 Millimeter bis etwa 30 Millimeter mal 30 Millimeter, bevorzugt mit einer Kantenlänge von etwa 25 Millimeter mal 25 Millimeter zu versehen. Dabei muss das Gehäuse im Querschnitt nicht unbedingt quadratisch sein, es kann auch rechteckig sein. Auch ist denkbar, dass die Seiten des Gehäusequerschnitts leicht gebogen verlaufen.

Die Länge des Gehäuses wird bevorzugt mit etwa 300 Millimeter bis etwa 1500 Millimeter bemessen.

Es hat sich gezeigt, dass bei einer derartigen Ausgestaltung des Gehäuses eine ausreichende Abdeckung verschiedenster Anwendungsfälle möglich ist.

Schließlich soll mit der Erfindung auch ein Kraftfahrzeug unter Schutz gestellt werden, welches mit wenigstens einer erfindungsgemäßen Beleuchtungsvorrichtung ausgestattet ist. Ein bevorzugtes Ausführungsbeispiel der Erfindung ist in den Figuren dargestellt und wird anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht immer maßstabsgetreu. In manchen Figuren können Proportionen übertrieben dargestellt sein, um Merkmale eines Ausführungsbeispiels deutlicher hervorheben zu können.

Es zeigen, jeweils schematisch
- Fig. 1: ein Kraftfahrzeug mit einer erfindungsgemäßen Beleuchtungsvorrichtung,
- Fig. 2: eine perspektivische Darstellung der Beleuchtungsvorrichtung in Alleinstellung,
- Fig. 3: eine Querschnittsdarstellung gemäß Schnittansicht III aus Fig. 2,
- Fig. 4: eine perspektivische Darstellung des bandartigen Trägers für die Leuchtmittel,
- Fig. 5: eine Schnittdarstellung gemäß Schnittansicht V aus Fig. 4 und
- Fig. 6: die Darstellung eines verwendeten Profils vom Gehäuse der Beleuchtungsvorrichtung im Querschnitt, in Abhängigkeit bevorzugter Fertigungsvarianten.

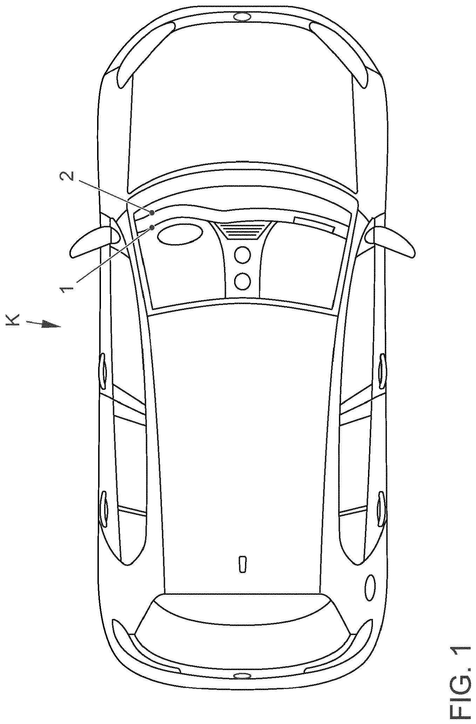

Die Beschreibung nimmt zunächst Bezug auf die Fig. 1.

In dieser Figur ist ein Kraftfahrzeug K ersichtlich, welches im Bereich einer Instrumententafel 1 mit einer erfindungsgemäßen Beleuchtungsvorrichtung 2 ausgebildet ist. Die Beleuchtungsvorrichtung 2 ist in der Art einer Lichtleiste ausgebildet, welche sich nahezu über die gesamte Länge der Instrumententafel 1 erstreckt.

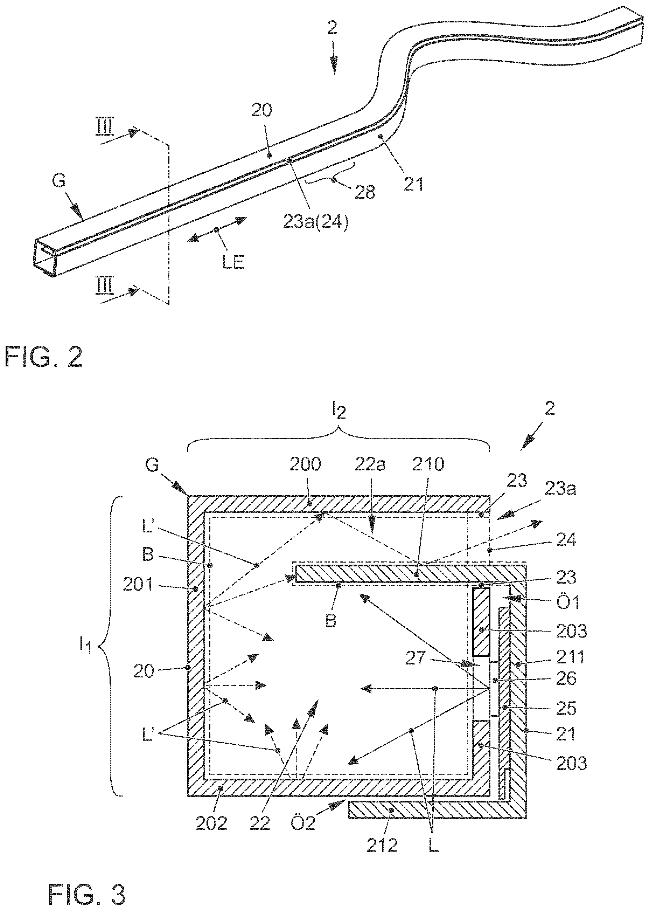

Wie der Fig. 2 zu entnehmen ist, weist die Beleuchtungsvorrichtung 2 ein längliches Gehäuse G mit einer Längserstreckung LE auf.

Das Gehäuse G ist aus zwei einseitig geöffneten Profilen 20 und 21 gebildet, welche derart zusammengeführt sind, dass sich eine schlitzartige Lichtaustrittsöffnung 23a bildet, welche sich entlang der gesamten Länge des Gehäuses G hinzieht.

Die Lichtaustrittsöffnung 23a kann mittels einer Lichtscheibe 24 verdeckt sein.

Aus der Fig. 3 wird das genaue Profil des Gehäuses G deutlich. So weist das Gehäuse G im Querschnitt eine in etwa G-artige Form auf.

Das Profil 20 und das Profil 21 weisen Öffnungsseiten Ö1 und Ö2, also Seiten mit wenigstens einer Öffnung auf, mit denen sie derart ineinander geschoben sind, dass sich das G-artige Profil des Gehäuses G ergibt.

Das Profil 20 weist vier Schenkel 200, 201, 202 und 203 auf, die in etwa rechtwinklig zueinander stehen. Dabei sind die Schenkel 200, 201 und 202 in etwa gleich lang. Der Schenkel 203 ist etwa um ein Viertel der Länge kürzer. Dadurch ergibt sich zwischen dem Schenkel 200 und dem Ende des Schenkels 203 eine schlitzartige Öffnung 23.

Das zweite Profil 21 ist in etwa U-artig ausgebildet, mit Schenkeln 210, 211 und 212. Die Schenkel 210 bis 212 sind wiederum in etwa senkrecht zueinander ausgerichtet.

Dabei verlaufen der Schenkel 212 in etwa parallel zum Schenkel 202, der Schenkel 211 in etwa parallel zum Schenkel 203 und der Schenkel 210 in etwa parallel zum Schenkel 200.

Im dargestellten, zusammengeschobenen Zustand, ragt der Schenkel 210 dicht über dem Ende des Schenkels 203 oder diesen sogar berührend in die Öffnung 23 des Profils 20 hinein. Dies erfolgt über ungefähr zwei Drittel der Länge vom Schenkel 200.

Der untere Schenkel 212 untergreift in dichtem Abstand oder sogar berührend den Schenkel 202 um etwa die Hälfte der Länge des Schenkels 202. Durch dieses exakte Ineinandergreifen der Profile 20 und 21 können unerwünschte Lichtstreuungen vermieden werden.

Auf dem in der Figur vertikalen Schenkel 211 des Profils 21 ist ein bandartiger, also länglicher Träger 25 mit einer Vielzahl von Leuchtmitteln 26 befestigt. Der Träger 26 erstreckt sich vorzugsweise entlang der gesamten Längserstreckung LE der Beleuchtungsvorrichtung 2.

Dabei sind die Leuchtmittel 26 in gleichmäßigen Abständen voneinander beabstandet. Jedem Leuchtmittel 26 ist eine Öffnung 27 im Schenkel 203 des Profils 20 zugeordnet. Auf diese Weise können von den Leuchtmitteln 26 erzeugte Lichtstrahlen L in eine Reflektorkammer 22 gelangen, welche zumindest teilweise durch die Innenseiten der Schenkel 210, 203, 202 und 201 gebildet wird.

Wie durch die Lichtstrahlen L` angedeutet ist, werden die durch die Leuchtmittel 26 in die Reflektorkammer 22 eingestrahlten Lichtstrahlen L vielfach diffus in der Reflektorkammer 22 reflektiert, bevor die reflektierten Lichtstrahlen L' in eine Lichtsaustrittskammer 22a gelangen und dort über die Lichtaustrittsöffnung 23a aus dem Gehäuse G austreten können.

Die Lichtaustrittsöffnung 23a wird durch den Schenkel 200 des Profils 20 und den in dieses hineinragenden Schenkel 210 des Profils 21 gebildet. Die optionale Lichtscheibe 24 ist gestrichelt angedeutet. Der Schenkel 210 führt auch zur Bildung der von der Reflektorkammer 22 abgetrennten Lichtsaustrittskammer 22a.

Es wird deutlich, dass durch die G-artige Ausbildung des Gehäuses G eine große zurücklegbare Lichtstrecke des von den Leuchtmitteln 26 ausgesendeten Lichts im Verhältnis zum erforderlichen Bauraum erzielbar ist. Auf diese Weise kann die Beleuchtungsvorrichtung 2 äußerst kompakt gehalten werden.

Zur Unterstützung einer diffusen Reflexion in der Reflektorkammer 22 und zur Minimierung von Lichtverlusten, sind die Profile 20 und 21 vorzugsweise aus einem hoch reflektierenden, besonders bevorzugt weißen Material. Alternativ oder zusätzlich können die Profile 20 und 21 zumindest bereichsweise mit einer hoch reflektierenden, besonders bevorzugten weißen Beschichtung B (gestrichelt angedeutet) versehen sein.

Um eine Biegung der Beleuchtungsvorrichtung 2 (vergleiche auch Fig. 2) zu ermöglichen, sind sowohl die Profile 20, 21 als auch der bandartige Träger 25 sowie die optionale Lichtscheibe 24 aus einem biegsamen Material ausgebildet.

Das Profil des Gehäuses G hat vorzugsweise eine Kantenlänge I1 mal I2 von etwa 25 Millimeter mal 25 Millimeter.

Wie bereits erwähnt werden die in das Gehäuse G gelangenden Lichtstrahlen L der Leuchtmittel 26 diffus, lediglich mit geringsten Reflexionsverlusten reflektiert. Der Reflexionsgrad ist vorzugsweise größer als 98 Prozent, so dass sich das Reflexionsverhalten im Innern des Gehäuses G an die Abstrahlcharakteristik eines lambertschen Strahlers annähert. Es sei noch darauf hingewiesen, dass abweichend vom Ausführungsbeispiel die Schenkel des Gehäuses G auch gekrümmt oder schräg gestellt sein können.

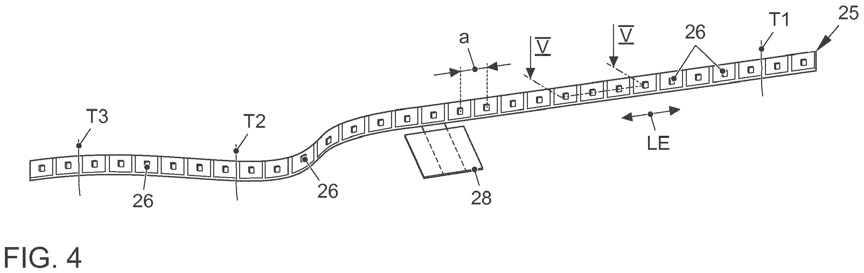

Anhand der Fig. 4 wird nunmehr der bandartige Träger 25 in Alleinstellung näher beleuchtet.

Der Träger 25 ist, wie bereits beschrieben, bandartig und biegsam ausgebildet. Er ist insbesondere als Leiterplatte ausgebildet, welche die Leuchtmittel 26 trägt.

Vorzugsweise sind die Leuchtmittel 26 in einem gegenseitigen Abstand a entlang einer Längserstreckung LE des Trägers 25 über die gesamte Länge des Trägers 25 angeordnet.

Die Leuchtmittel 26 können vorzugsweise als Leuchtdioden (LEDs), insbesondere als RGB-Leuchtdioden zur Aussendung von Licht in einer Vielzahl von Farben ausgebildet sein.

Der Abstand a der Leuchtmittel 26 beträgt vorzugsweise in etwa dreißig Millimeter und auf dem Träger 25 sind vorzugsweise in etwa dreißig Leuchtmittel 26 angeordnet.

Ferner ist ersichtlich, dass der Träger 25 mit einer Platine 28 verbunden ist. Die Platine 28 ist mit einem Spannungswandler, einer Busschnittstelle und einem Mikrocontroller zur geeigneten, schnellen und spannungsgerechten Ansteuerung der Leuchtmittel 26 versehen (vgl. auch Fig. 2).

Ganz besonders bevorzugt ist der Träger 25 als Gleichteil ausgebildet. Das heißt, der Träger 25 wird auch für unterschiedliche Anwendungsfälle stets in gleicher Weise, also mit der gleichen Länge und der gleichen Anzahl von Leuchtmitteln 26 produziert. Zur Anpassung an unterschiedliche geometrische Anwendungsfälle, kann der Träger 25 an unterschiedlichsten Trennstellen zwischen den Leuchtmitteln 26 variabel getrennt beziehungsweise gekürzt werden. Dies ist an nur beispielhaft dargestellten Trennstellen T1, T2 oder T3 denkbar. Nach einer solchen Kürzung (Ablängung) an einer Trennstelle ist der verbleibende Rest vom Träger 25 mitsamt der Platine 28 noch voll funktionsfähig. Anschließend kann eine Biegung des Trägers 25 (zumindest in einer Ebene) zur gewünschten Kontur erfolgen.

Durch die beschriebene Realisierung des Trägers 25 als biegsames Gleichteil für verschiedene Anwendungen können die Kosten für die Fertigung des Trägers deutlich reduziert werden.

Es kann stets das gleiche Werkzeug benutzt werden und auch eine eventuell notwendige Kalibrierung der Leuchtmittel 26 ist vereinfacht. Bei Ausbildung der Leuchtmittel 26 als RGB-Leuchtdioden ist zumindest nach dem derzeitigen Stand der Technik eine Kalibrierung notwendig. Eine solche dient dazu, dass die RGB-LEDs Licht in definierten, gleichen Farben abstrahlen können und so im Endeffekt die Grundvoraussetzung für ein homogenes Lichterscheinungsbild geschaffen wird. Die Kalibrierung kann nach der Bestückung des Trägers 25 mit den Leuchtmitteln 26 stets auf gleiche Weise mit dem gleichen Werkzeug erfolgen, bevor der biegsame Träger 25 ggf. noch in eine gewünschte, der Form des Gehäuses G folgende Form gebogen wird.

Es ist auch der Anwendungsfall denkbar, bei dem eine Länge des Trägers 25 nicht ausreicht. In diesem Fall können mehrere Träger 25 in einem geeigneten Gehäuse verbaut werden. Gegebenenfalls ist dann einer der Träger 25 wiederum bedarfsgerecht zu kürzen.

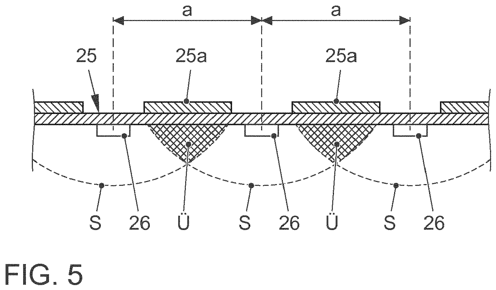

Aus der Fig. 5 ist eine Teil-Schnittansicht des Trägers 25 ersichtlich. Dabei ist erkennbar, dass an der den Leuchtmitteln 25 abgewandten Seite des Trägers 26 starre Materialbestandteile 25a aufgebracht sind. Die Materialbestandteile 25a bestehen aus einem wärmeleitenden Material und dienen zu einer besseren Wärmeverteilung auf dem Träger 25 beziehungsweise zu einer besseren Wärmeabfuhr.

Jedes Leuchtmittel 26 erzeugt aufgrund seiner Abstrahlcharakteristik ein bestimmtes, halbkugelartiges Leuchtsegment S.

Es ist sehr vorteilhaft, wenn der Abstand a der Leuchtmittel 26 so gewählt ist, dass sich die Leuchtsegmente S der einzelnen Leuchtmittel 26 in einem Randbereich überschneiden, also ineinander übergehen. Dies ist im Ausführungsbeispiel der Fall. Daher sind Überschneidungsbereiche Ü dargestellt.

Aufgrund der Überschneidung sind die für einen Betrachter sichtbaren Leuchtsegmente S nicht mehr voneinander zu unterscheiden beziehungsweise nicht mehr abzählbar, so dass dies zu einem sehr homogenen Lichterscheinungsbild der Beleuchtungsvorrichtung 2 beiträgt.

Als bevorzugtes Ausführungsbeispiel ergibt sich mit den bevorzugt gewählten Abständen a, bei einer bevorzugten Bestückung mit dreißig Leuchtmitteln 26, den bevorzugt gewählten Kantenlängen 11, I2 eine Gesamtlänge des Gehäuses G von etwa 900 Millimeter bis etwa 1000 Millimeter.

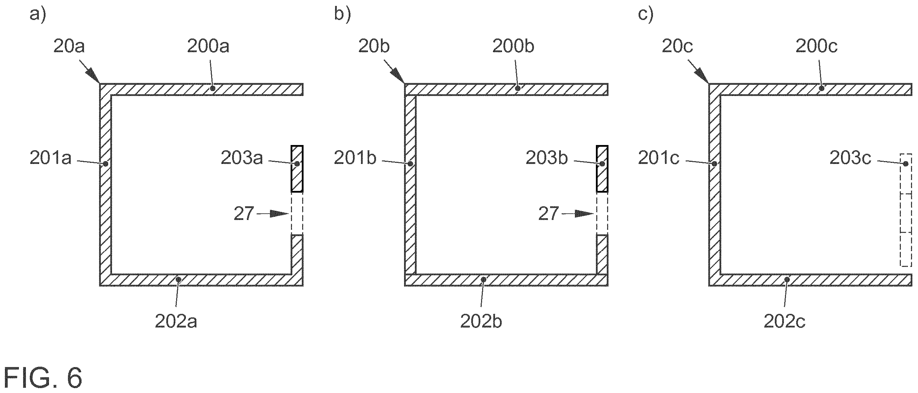

Schließlich wird anhand der Fig. 6 noch die Auswirkung verschiedener bevorzugter Herstellungsverfahren auf die Ausgestaltung der Profile des Gehäuses G veranschaulicht.

So ist es gemäß Fig. 6a beispielsweise denkbar, ein Profil 20a der Beleuchtungsvorrichtung in einem 3D-Druck herzustellen. Bei einem 3D-Druck erfolgt der Aufbau des Profils 20a computergesteuert nach vorgegebenen Maßen und Formen zum endgültigen Werkstück. Schenkel 200a, 201a, 202a und 203a sind also einstückig (stoffschlüssig) miteinander verbunden, wobei geringste Geometriebeschränkungen bestehen. Es sind vielerlei Materialien für das Profil 20a, wie beispielsweise Kunststoff, Kunstharz oder Metall denkbar.

In der Fig. 6b ist ein Profil 20b aus geschäumten Kunststofffolien, beispielsweise aus Polyethylenterephthalat (PET) oder Polycarbonat (PC) hergestellt. Derartige Folien weisen ausgezeichnete diffuse Reflexionseigenschaften auf. Sie sind jedoch nur in einer Ebene biegbar. Im konkreten Fall sind deshalb vertikale Schenkel 201b und 203b in der gewünschten Form zu biegen und horizontale Schenkel 200b und 202b entsprechend auszustanzen und mit den anderen Schenkeln zu verbinden. Die Verbindung der Schenkel erfolgt vorzugsweise durch Verschweißen.

Schließlich ist als bevorzugtes Herstellungsverfahren auch das Spritzgussverfahren zu nennen, wofür sich vor allem Kunststoff als Werkstoff eignet. Allerdings ist auch hier die Geometrie beschränkt. Es ist nur ein U-förmiges Profil 20c mit senkrecht aufeinander stehenden Schenkeln 200c, 201c und 202c in einem Arbeitsgang herstellbar. Ein durch einen Schenkel 203c verursachter Hinterschnitt ist auf Grund nicht möglicher Entformung daher undenkbar. Der Schenkel 203c muss also in diesem Fall ebenfalls nachträglich angebracht werden (vergleiche Fig. 6c).

### Bezugszeichenliste

- 1: Instrumententafel
- 2: Beleuchtungsvorrichtung
- 20, 20a, 20b, 20c: Profil
- 21: Profil
- 22: Reflektorkammer
- 22a: Lichtaustrittskammer
- 23: Öffnung
- 23a: Lichtaustrittsöffnung
- 24: Lichtscheibe
- 25: bandartiger Träger
- 25a: starre Materialbestandteile
- 26: Leuchtmittel
- 27: Öffnungen
- 28: Platine
- 200-203: Schenkel
- 200a-203a: Schenkel
- 200b-203b: Schenkel
- 200c-203c: Schenkel
- 210-212: Schenkel
- a: Abstand
- B: hochreflektierende Beschichtung
- G: Gehäuse
- K: Kraftfahrzeug
- I1, I2: Kantenlänge
- L: Lichtstrahlen
- L': Lichtstrahlen
- LE: Längserstreckung
- Ö1, Ö2: Öffnungsseiten
- S: Leuchtsegmente
- T1-T3: Trennstellen
- Ü: Überschneidung

## Patentansprüche

1. Beleuchtungsvorrichtung (2) zur Beleuchtung des Innenraums eines Kraftfahrzeugs (K), mit einem länglichen Gehäuse (G), durch welches ein bandartiger Träger (25) mit einer Vielzahl von Leuchtmitteln (26) gehalten ist, wobei das Gehäuse (G) als Reflektorelement ausgebildet ist, **dadurch gekennzeichnet, dass** das Gehäuse (G) im Querschnitt G-artig ausgebildet ist, derart, dass eine Reflektorkammer (22) und eine Lichtaustrittskammer (22a) ausgebildet werden, wobei in der Reflektorkammer (22) von den Leuchtmitteln (26) abgebbare oder abgegebene Lichtstrahlen (L) vielfach diffus reflektierbar sind oder reflektiert werden, bevor sie zu einer Lichtaustrittsöffnung (23a) der Lichtaustrittskammer (22a) gelangen und dort über die Lichtaustrittsöffnung (23a) aus dem Gehäuse (G) austreten können.

2. Beleuchtungsvorrichtung (2) nach dem vorhergehenden Anspruch, **dadurch gekennzeichnet, dass** der Träger (25) für die Leuchtmittel (26) biegsam ausgebildet ist.

3. Beleuchtungsvorrichtung (2) nach einem der vorhergehenden Ansprüche, **dadurch gekennzeichnet, dass** das Gehäuse (G) aus einem weißen, hochreflektierenden Material ist und/oder mit einer weißen, hochreflektierenden Beschichtung (B) versehen ist.

4. Beleuchtungsvorrichtung (2) nach einem der vorhergehenden Ansprüche, **dadurch gekennzeichnet, dass** das Gehäuse (G) im Querschnitt aus zwei jeweils einseitig geöffneten Profilen (20, 21) gebildet ist, die mit ihren Öffnungsseiten (Ö1, Ö2) ineinander ragen.

5. Beleuchtungsvorrichtung (2) nach einem der vorhergehenden Ansprüche, **dadurch gekennzeichnet, dass** der Träger (25) als variabel ablängbares Element derart ausgebildet ist, dass nach Ablängung ein verbleibender Teil des Trägers (25) weiterhin voll funktionsfähig ist.

6. Beleuchtungsvorrichtung (2) nach einem der vorhergehenden Ansprüche, **dadurch gekennzeichnet, dass** durch jedes Leuchtmittel (26) ein von einem Betrachter wahrnehmbares Leuchtsegment (S) erzeugbar ist oder erzeugt wird, wobei der Abstand (a) der Leuchtmittel (26) wenigstens von etwa 15 mm bis etwa 35 mm, bevorzugt mit wenigstens etwa 30 mm, bemessen ist.

7. Beleuchtungsvorrichtung (2) nach einem der vorhergehenden Ansprüche, **dadurch gekennzeichnet, dass** das Gehäuse (G) im Querschnitt eine Kantenlänge von etwa 20 mm × 20 mm bis etwa 30 mm × 30 mm, bevorzugt etwa 25 mm × 25 mm, aufweist.

8. Kraftfahrzeug (K), **gekennzeichnet durch** wenigstens eine Beleuchtungsvorrichtung (2) nach einem der vorhergehenden Ansprüche.

## Claims

1. Lighting apparatus (2) for lighting the interior of a motor vehicle (K), having an elongate housing (G) by means of which a band-like support (25) having a multiplicity of illuminants (26) is held, the housing (G) being in the form of a reflector element, **characterized in that** the housing (G) is in G-like form in cross section, in such a way that a reflector chamber (22) and a light exit chamber (22a) are formed, wherein beams of light (L) deliverable or delivered by the illuminants (26) are diffusely reflectable or reflected multiple times in the reflector chamber (22) before they reach a light exit opening (23a) in the light exit chamber (22a) and can exit the housing (G) at that point via the light exit opening (23a).

2. Lighting apparatus (2) according to the preceding claim, **characterized in that** the support (25) for the illuminants (26) is in flexible form.

3. Lighting apparatus (2) according to either of the preceding claims, **characterized in that** the housing (G) is made of a white, highly reflective material and/or is provided with a white, highly reflective coating (B).

4. Lighting apparatus (2) according to any of the preceding claims, **characterized in that** the cross section of the housing (G) is formed from two profiles (20, 21), each open on one side, whose opening sides (Ö1, Ö2) project into one another.

5. Lighting apparatus (2) according to any of the preceding claims, **characterized in that** the support (25) is in the form of a variably truncatable element such that following truncation a remaining portion of the support (25) continues to be fully operational.

6. Lighting apparatus (2) according to any of the preceding claims, **characterized in that** a light-emitting segment (S) perceptible by a viewer is producible or produced by each illuminant (26), wherein the interval (a) between the illuminants (26) is at least approximately 15 mm to approximately 35 mm, preferably at least approximately 30 mm, in size.

7. Lighting apparatus (2) according to any of the preceding claims, **characterized in that** the cross section of the housing (G) has an edge length of approximately 20 mm × 20 mm to approximately 30 mm × 30 mm, preferably approximately 25 mm × 25 mm.

8. Motor vehicle (K), **characterized by** at least one lighting apparatus (2) according to any of the preceding claims.

## Revendications

1. Dispositif d'éclairage (2) permettant d'éclairer l'habitacle d'un véhicule automobile (K), comprenant un boîtier allongé (G) qui retient un support (25) en forme de bande avec une pluralité de moyens lumineux (26), dans lequel le boîtier (G) est réalisé sous forme d'élément réflecteur, **caractérisé en ce que** le boîtier (G) est réalisé en forme de G en section transversale de telle sorte qu'une chambre de réflecteur (22) et une chambre de sortie de lumière (22a) sont réalisées, dans lequel, dans la chambre de réflecteur (22), des rayons lumineux (L) émis ou pouvant être émis par les moyens lumineux (26) sont réfléchis ou peuvent être réfléchis de manière largement diffuse avant d'atteindre une ouverture de sortie de lumière (23a) de la chambre de sortie de lumière (22a) et de pouvoir y sortir du boîtier (G) à travers l'ouverture de sortie de lumière (23a) .

2. Dispositif d'éclairage (2) selon la revendication précédente, **caractérisé en ce que** le support (25) pour les moyens lumineux (26) est réalisé de manière souple.

3. Dispositif d'éclairage (2) selon l'une quelconque des revendications précédentes, **caractérisé en ce que** le boîtier (G) est composé d'un matériau blanc, hautement réfléchissant, et/ou avec un revêtement (B) blanc, hautement réflecteur.

4. Dispositif d'éclairage (2) selon l'une quelconque des revendications précédentes, **caractérisé en ce que** le boîtier (G) est formé en section transversale à partir de deux profilés (20, 21) ouverts d'un côté respectivement qui font saillie l'un dans l'autre par leurs faces d'ouverture (Ö1, Ö2).

5. Dispositif d'éclairage (2) selon l'une quelconque des revendications précédentes, **caractérisé en ce que** le support (25) est réalisé en tant qu'élément pouvant être découpé de manière variable de telle sorte qu'après la découpe, une partie restante du support (25) est toujours entièrement fonctionnelle.

6. Dispositif d'éclairage (2) selon l'une quelconque des revendications précédentes, **caractérisé en ce que** chaque moyen lumineux (26) permet de générer ou génère un segment lumineux (S) perceptible par un observateur, dans lequel l'écartement (a) des moyens lumineux (26) mesure au moins environ 15 mm à environ 35 mm, de préférence au moins environ 30 mm.

7. Dispositif d'éclairage (2) selon l'une quelconque des revendications précédentes, **caractérisé en ce que** le boîtier (G) présente en section transversale une longueur d'arête d'environ 20 mm × 20 mm à environ 30 mm × 30 mm, de préférence d'environ 25 mm × 25 mm.

8. Véhicule automobile (K), **caractérisé par** au moins un dispositif d'éclairage (2) selon l'une quelconque des revendications précédentes.
